# EUROPEAN PATENT APPLICATION

(11) **EP 3 780 815 A1**
(43) Date of publication of application: **17.02.2021**
(21) Application number: 19781640.8
(22) Date of filing: 02.04.2019
(51) Int. Cl.: H04W 72/04

(54) **METHOD EXECUTED BY USER EQUIPMENT METHOD, METHOD EXECUTED BY BASE STATION, USER EQUIPMENT, AND BASE STATION**

(30) Priority: 02.04.2018 CN 201810285423
(71) Applicant: Sharp Kabushiki Kaisha, Sakai-shi Osaka 590-8522 (JP); FG Innovation Company Limited, Hong Kong (CN)
(72) Inventor: CHANG, Ningjuan, Shanghai 201206 (CN); LUO, Chao, Shanghai 201206 (CN); LIU, Renmao, Shanghai 201206 (CN)
(74) Representative: Müller-Boré & Partner Patentanwälte PartG mbB
(86) International application number: PCT/CN2019/081009
(87) International publication number: WO 2019/192477

(57) **Abstract**

A method executed by a user equipment is provided. The method executed by the user equipment includes: acquiring a coverage enhancement level of the user equipment; determining a selection probability of an anchor carrier physical random access channel (PRACH) resource for early data transmission (EDT) based on the coverage enhancement level; determining a selection probability of a non-anchor carrier PRACH resource for EDT based on the selection probability of the anchor carrier PRACH resource for EDT and a number of non-anchor carrier PRACH resources for EDT; randomly selecting a PRACH resource used for transmitting a random access preamble by using the determined selection probability of the anchor carrier PRACH resource for EDT and the determined selection probability of the non-anchor carrier PRACH resource for EDT; and transmitting the random access preamble to a base station by using the selected PRACH resource.

## Description

### TECHNICAL FIELD

The present disclosure relates to the field of radio communication technologies, and in particular, the present disclosure relates to a method executed by a user equipment that determines a to-be-used random access resource in a random access procedure for early data transmission, a method executed by a base station, a user equipment, and a base station. This application claims priority based on CN 201810285423.0 filed on April 2, 2018, the contents of which are incorporated herein by reference.

### BACKGROUND

In March 2017, at the 3rd Generation Partnership Project (3GPP) RAN#75 plenary meeting, a new work project on further enhancements of the NarrowBand Internet Of Things (NB-IoT) (see RP-170852: New WID on Further NB-IoT enhancements) was approved. One of the objectives of this research project is to enhance the transmission of small data packet services. Considering that the amount of data that small data packet services need to transmit in a period of time is relatively small, such as 1000 bits, the transmission can be completed via a transmission block of a physical layer, but the data transmission in the existing mechanism can be completed only after a connection with an air interface is completed to be in an RRC connected state. As a result, the signaling overhead for transmitting small data packets is relatively large, and in consideration that a user terminal of a Machine Type Communication (MTC) or an NB-IoT has a huge amount of data, more serious signaling overhead is caused. In addition, the excessively large signaling overhead also causes unnecessary energy consumption of the user terminal. In order to complete the transmission of small data packets with less signaling overhead and fulfill energy conservation of a user terminal (User Equipment (UE)), in the small data transmission enhancement of Release 15, it is proposed that the UE may implement data transmission without entering a Radio Resource Control (RRC) connection state. For example, small data and a random access message 3 are transmitted together in the random access procedure (referred to as early data transmission). In the current consensuses reached by 3GPP, the UE judges, according to several conditions of transmitting the current data, whether to use the small data transmission mechanism for data transmission, such as whether a network side is configured with small data transmission parameters, whether the UE supports small data transmission, and whether the data amount of to-be-transmitted small data is less than or equal to the configured maximum possible transmission block size (TBS). The small data transmission mechanism can be used only when the amount of data to be transmitted by the UE is less than or equal to the maximum possible transmission block size.

In the conclusion reached by the current 3GPP RAN2 meeting, an RRC layer of a UE determines whether to use the early data transmission mechanism. If the RRC layer determines to initiate early data transmission, then the RRC initiates an operation related to early data transmission (e.g., restoring a data radio bearer (DRB)) and configure a lower layer to adopt the early data transmission mechanism, for example, configuring a MAC layer to initiate a random access procedure for early data transmission. The MAC layer of the UE configured with early data transmission informs, by transmitting a random access preamble on a random resource dedicated to early data, a base station of its intention to perform early data transmission. After the base station receives the random access preamble, uplink resources required for the early data transmission may be allocated for the UE in a random access response. Therefore, the random access resources used in the early data transmission and the random access resources used by users who conventionally do not use early data transmission (such as users of Release 14 and earlier releases) are configured separately, and they are configured with distinguished coverage enhancement levels. In October 2017, at the 3GPP RAN2#99bis meeting held in Prague, Czech Republic, the RAN2 reached the following consensuses: division of PRACH resources may be used to notify a base station that a UE intends to perform early data transmission in Msg3; and the maximum possible TBS may be broadcasted for the Msg3 based on each coverage enhancement level.

The present disclosure addresses the problem of how to implement a random access procedure for early data transmission.

### SUMMARY

The present disclosure provides a method executed by a user equipment, a method executed by a base station, a user equipment, and a base station, in order to solve the above problems.

According to a first aspect of the present disclosure, a method executed by a user equipment is provided, comprising: acquiring a coverage enhancement level of the user equipment; and determining a selection probability of an anchor carrier physical random access channel (PRACH) resource for early data transmission (EDT) based on the coverage enhancement level; determining a selection probability of a non-anchor carrier PRACH resource for EDT based on the selection probability of the anchor carrier PRACH resource for EDT and the number of non-anchor carrier PRACH resources for EDT; randomly selecting a PRACH resource used for transmitting a random access preamble by using the determined selection probability of the anchor carrier PRACH resource for EDT and the determined selection probability of the non-anchor carrier PRACH resource for EDT; and transmitting the random access preamble to a base station by using the selected PRACH resource.

In the above method, the user equipment receives an RRC message transmitted from the base station and comprising an EDT information element of an anchor carrier PRACH resource selection probability list, and acquires a selection probability corresponding to the coverage enhancement level in the EDT information element as the selection probability of the anchor carrier PRACH resource for EDT.

In the above method, the user equipment receives an RRC message transmitted from the base station and comprising an information element of an anchor carrier PRACH resource selection probability list, acquires a selection probability corresponding to the coverage enhancement level in the information element, and calculates the selection probability of the anchor carrier PRACH resource for EDT by multiplying the acquired selection probability by a coefficient, wherein the coefficient is acquired based on the coverage enhancement level from a coefficient list comprised in the RRC message, or is a fixed value ranging from 0 to 1.

In the above method, the selection probabilities of all non-anchor carrier PRACH resources for EDT are equal, and are calculated by the following formula: (1 - the selection probability of the anchor carrier PRACH resource for EDT)/the number of the non-anchor carrier PRACH resources for EDT.

In the above method, if an anchor carrier is not configured with a PRACH resource for EDT corresponding to the coverage enhancement level, then a selection probability of the anchor carrier for EDT is 0.

In the above method, when the user equipment selects the PRACH resource, a PRACH resource occupied by a PRACH resource for conventional non-EDT is excluded.

According to a second aspect of the present disclosure, a user equipment is provided, comprising: a processor; and a memory storing instructions, wherein when run by the processor, the instructions execute the method according to the first aspect of the present disclosure.

According to a third aspect of the present invention, a method executed by a base station is provided, comprising: transmitting to a user equipment an RRC message comprising an EDT information element of an anchor carrier PRACH resource selection probability list, or an RRC message comprising an information element of an anchor carrier PRACH resource selection probability list and a coefficient; and receiving a random access preamble for indicating EDT transmitted from the user equipment.

In the above method, the user equipment is the user equipment according to the second aspect of the present invention.

According to a fourth aspect of the present invention, a base station is provided, comprising: a processor; and a memory storing instructions, wherein when run by the processor, the instructions execute the method according to the third aspect of the present invention.

According to the method executed by the user equipment, the method executed by the base station, the user equipment, and the base station involved in the present disclosure, the UE can select, with a correct probability, the anchor carrier or the non-anchor carrier configured with the PRACH resource for EDT, thereby avoiding the signaling overhead and delay caused by falling back of the UE to a non-EDT operation due to selection of a carrier not configured with the PRACH resource for EDT.

### BRIEF DESCRIPTION OF THE DRAWINGS

The above and other features of the present disclosure will become more apparent in view of the following detailed description with reference to the accompanying drawings, wherein
FIG. 1 illustrates a flowchart of a method executed by a user equipment according to an embodiment of the present disclosure;
FIG. 2 is a flowchart of a method executed by a base station according to an embodiment of the present disclosure;
FIG. 3 illustrates a flowchart of an example of a method for determining a selection probability of an anchor carrier PRACH resource for EDT according to an embodiment of the present disclosure;
FIG. 4 illustrates a flowchart of another example of a method for determining a selection probability of an anchor carrier PRACH resource for EDT according to an embodiment of the present disclosure;
FIG. 5 illustrates a flowchart of still another example of a method for determining a selection probability of an anchor carrier PRACH resource for EDT according to an embodiment of the present disclosure;
FIG. 6 illustrates a diagram showing an example of a period of a PRACH resource for EDT and a PRACH resource for conventional non-EDT in a time domain according to an embodiment of the present disclosure;
FIG. 7 illustrates a flowchart of a method for determining a TBS value in a random access response (RAR) in a random access procedure for EDT according to an embodiment of the present disclosure;
FIG. 8 illustrates a block diagram of a user equipment according to an embodiment of the present disclosure; and
FIG. 9 is a block diagram of a base station 60 according to an embodiment of the present disclosure.

### DETAILED DESCRIPTION

According to the following detailed description of exemplary embodiments of the present disclosure with reference to the accompanying drawings, other aspects, advantages, and prominent features of the present disclosure will become apparent to those skilled in the art.

In the present disclosure, the terms "including" and "comprising" and their derivatives mean including but not limited to; and the term "or" is inclusive and means and/or.

In this specification, the following various embodiments for describing the principle of the present disclosure are merely illustrative, and should not be construed as limiting the scope of the present disclosure in any way. The following description with reference to the accompanying drawings is used to help a comprehensive understanding of exemplary embodiments of the present disclosure defined by the claims and their equivalents. The following disclosure includes a variety of specific details to help understanding, but these details should be considered only exemplary. Therefore, those of ordinary skill in the art should recognize that various changes and modifications can be made to the embodiments disclosed herein without departing from the scope and spirit of the present disclosure. In addition, for clarity and conciseness, disclosure of well-known functions and structures are omitted. In addition, in the accompanying drawings, the same reference numerals are used for similar functions and operations.

By taking a Long Term Evolution (LTE) mobile communication system and its subsequent evolved versions as an example application environment, a plurality of embodiments according to the present disclosure are described in detail. However, it should be pointed out that the present disclosure is not limited to the following implementations, but can be applied to more other radio communication systems, such as an MTC system, and can also be used in a 5G next-generation radio communication system (New Radio (NR)).

The base station (BS) in the present disclosure may be any type of base station, including a Node B, an enhanced base station (eNB), a 5G communication system base station (gNB), or a micro base station, a pico base station, a macro base station, a home base station, etc.; and the cell may also be a cell under the base station of any one of the above types. In the present disclosure, if not otherwise specifically stated, then the coverage enhancement level is equivalent to an enhanced coverage level.

Different embodiments may also work together.

Some concepts of the present disclosure are described. It should be noted that some of the names in the following disclosure are merely illustrative and not limiting, and other names can also be used.

### Random access procedure:

Random access is a basic and important procedure in a 3GPP LTE system, and usually includes contention-based random access and non-contention-based random access. Contention-based random access includes the following 4 steps:
Step 1: A user equipment (UE) randomly selects a preamble and transmits the preamble, specifically, a random access message 1 (Msg1) on a random access channel.
Step 2: After detecting that the preamble is transmitted, a base station transmits an RAR, specifically, a random access message 2 (Msg2) in the downlink. The random access response should include at least the following information:
   a number of the received preambles;
   timing adjustment information;
   uplink (UL) grant information allocated for the UE; and
   a temporarily allocated cell radio network temporary identity (C-RNTI).
Step 3: After receiving the random access response, the UE transmits an uplink message, specifically, a random access message 3 (Msg3) on an allocated uplink resource as instructed by the random access response.
Step 4: The base station receives the uplink message from the UE, and returns a conflict resolution message, specifically, a random access message 4 (Msg4) to the UE that has succeeded in accessing.

**Early Data Transmission (EDT):** A small data transmission optimization scheme in R15 further optimizes the characteristics of small data transmission from a control plane and a user plane. For uplink data transmission, the optimization is mainly to transmit uplink small data with the message 3 or transmit downlink small data with the message 4 in the random access procedure. Compared with the conventional data transmission, this optimized transmission can complete data transmission at an earlier time, so it is referred to as early data transmission. In the present disclosure, small data (small data or small packet) can be equivalent to early data.

**Enhanced coverage level:** In the enhanced coverage technology, the degree of coverage that needs to be enhanced is classified into a plurality of enhanced coverage levels. For example, in NB-IoT, three enhanced coverage levels are defined. In some enhanced coverage methods, each enhanced coverage level may correspond to a different set of radio parameter configurations, such as a random access configuration (e.g., a PRACH (Physical Random Access CHannel) resource). When a medium access control (MAC) layer of the UE initiates random access, the enhanced coverage level of the UE is determined according to a measured Reference Signal Receiving Power (RSRP) and a RSRP threshold received in system information and used for determining the enhanced coverage level, and the corresponding random access resource (such as the preamble) and a parameter (such as the size of a random access response window) are selected according to the determined enhanced coverage level in order to initiate the random access procedure.

**Anchor carrier:** The anchor carrier refers to a carrier considered by the UE as transmitting a physical broadcast channel (PBCH), a primary synchronization signal (PSS)/secondary synchronization signal (SSS), a system information block (SIB), and the like related to the NB-IoT. Specifically, the UE receives a synchronization signal and system information on the anchor carrier.

**Non-anchor carrier:** The non-anchor carrier is a carrier considered by the UE as not transmitting data of a PBCH, a PSS, an SSS, a SIB, etc. related to the NB-IoT. Specifically, the UE considers that the non-anchor carrier is only used for receiving or transmitting data unicast by a physical downlink control channel (PDCCH), a physical downlink shared channel (PDSCH), a physical uplink shared channel (PUSCH), etc. related to the NB-IoT.

**Physical Random Access Channel resource:** Physical Random Access Channel (PRACH) resource. In the NB-IoT system of Release 14 and later releases, configuring random access resources on a plurality of carriers is supported, including the anchor carrier and the non-anchor carrier. The base station broadcasts a physical random access channel parameter configuration list (see the NPRACH-ParametersList-NB information element in the 3GPP protocol specification 36.331) on each carrier via system information, and the physical random access channel parameter configuration list on each carrier includes the physical random access channel parameter configuration (see the NPRACH-Parameters-NB information element in the 3GPP protocol specification 36.331) in one or a plurality of coverage enhancement levels. Specifically, one coverage level corresponds to one set of physical random access channel parameter configurations, and such a set of physical random access channel parameter configurations is referred to as a physical random access channel resource (PRACH resource). In the NB-IoT, the PRACH resource is also referred to as an NPRACH resource. The physical random access channel resource may refer to a physical frequency resource and/or a time domain resource and/or a code domain resource (such as a preamble) used for random access.

**NPRACH-ParametersList information element:** This information element is used for configuring PRACH parameters of each PRACH resource on an anchor carrier or a non-anchor carrier. Each item in the list corresponds to a PRACH parameter configuration of one PRACH resource. Each PRACH resource may be regarded as corresponding to one coverage enhancement level.

**NPRACH-Parameters information element:** This information element is an item in the NPRACH-ParametersList information element, and is used for configuring PRACH parameters of a PRACH resource. The PRACH parameters include a PRACH period, a PRACH start time, a PRACH subcarrier offset, the number of PRACH subcarriers, the number of NPDCCH repetitions, and the like.

**nprach-ProbabilityAnchorList information element:** This information element is used for configuring a selection probability of each PRACH resource on the anchor carrier. Each item in the list corresponds to an anchor carrier selection probability of one PRACH resource. Each PRACH resource may be regarded as corresponding to one coverage enhancement level.

**nprach-ProbabilityAnchor information element:** This information element is used for configuring a selection probability of an anchor carrier PRACH resource. It is included in the nprach-ProbabilityAnchorList information element.

In the NB-IoT system of Release 14 and later releases, configuring random access resources on a plurality of carriers is supported, including the anchor carrier and the non-anchor carrier. The base station broadcasts an NPRACH anchor carrier probability list (see the nprach-ProbabilityAnchorList information element in the 3GPP Defense Specification 36.331) via system information, and the list includes one or a plurality of NPRACH anchor carrier probabilities (see the nprach-ProbabilityAnchor information element in the 3GPP Protocol Specification 36.331), where one NPRACH anchor carrier probability corresponds to one coverage enhancement level. The NPRACH anchor carrier probability is used for carrier selection when random access resources of a plurality of carriers are configured. Specifically, when PRACH resources are provided on a plurality of carriers in the same coverage enhancement level, the selection probability of the anchor carrier PRACH resource is the nprach-ProbabilityAnchor corresponding to the corresponding coverage enhancement level. The selection probabilities of all non-anchor carrier PRACH resources are equal. Specifically, the selection probability of the PRACH resource on a non-anchor carrier is (1 - nprach-Probability Anchor) / (the number of non-anchor carrier PRACH resources).

As disclosed previously, the 3GPP RAN2 has reached the conclusion that in a system supporting EDT, the configuration of the PRACH resource for EDT is independent of the configuration of the conventional non-EDT PRACH resource in order to indicate the EDT intention of the UE to the base station. In other words, in a cell supporting EDT, the base station configures a list of PRACH resources for EDT on a carrier so that the UE supporting EDT initiates EDT, and the base station also configures a list of PRACH resources not for EDT in order to support the conventional data transmission procedure (and random access procedure). The conventional data transmission procedure/random access procedure is the conventional non-EDT data transmission procedure/random access procedure. For example, in the PRACH configuration of a cell, the configurations used for the conventional non-EDT procedure includes PRACH configurations on an anchor carrier, a non-anchor carrier #1, a non-anchor carrier #2, a non-anchor carrier #3, and a non-anchor carrier #4; and the configurations for EDT include an anchor carrier, a non-anchor carrier #1, and a non-anchor carrier #3. When a cell includes both the PRACH configuration for EDT and the conventional non-EDT PRACH configuration, and carriers included in the PRACH configurations are different, the UE that intends to initiate the random access procedure for EDT needs to determine a random access resource used for transmitting a random access preamble. The following embodiments of the present disclosure provide specific implementations related to this problem.

In the following embodiments of the present disclosure, indicate/indication and notify/notification or inform/information may be interchanged. The UE may refer to an NB-IoT UE, a Bandwidth reduced Low complexity (BL) UE, or a UE in enhanced coverage, and may also be another UE such as a 5G NR UE. In the present disclosure, the PRACH and the NPRACH may be replaced.

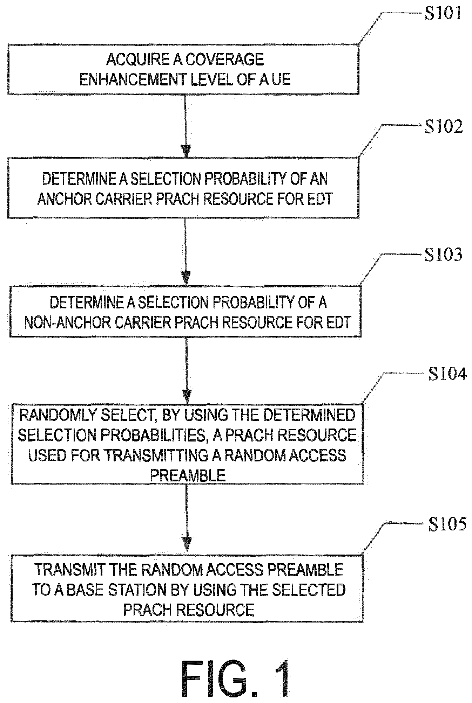

FIG. 1 illustrates a flowchart of a method executed by a user equipment according to an embodiment of the present disclosure.

In step S101, a coverage enhancement level of the user equipment is acquired.

In step S102, based on the coverage enhancement level, a selection probability (i.e., nprach-ProbabilityAnchorEDT) of an anchor carrier PRACH resource for EDT is determined.

In step S103, a selection probability of a non-anchor carrier PRACH resource for EDT is determined based on the selection probability of the anchor carrier PRACH resource for EDT and the number of non-anchor carrier PRACH resources for EDT.

In step S104, a PRACH resource used for transmitting a random access preamble is randomly selected by using the determined selection probability of the anchor carrier PRACH resource for EDT and the determined selection probability of the non-anchor carrier PRACH resource for EDT.

In step S105, the random access preamble is transmitted to the base station by using the selected PRACH resource.

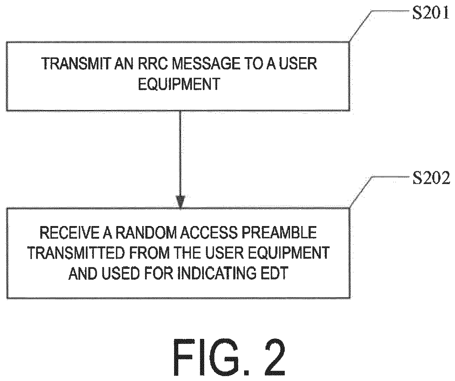

The method executed by the base station as illustrated in the following. FIG. 2 is a flowchart of a method executed by a base station according to an embodiment of the present disclosure.

In step S201, the base station transmits to a user equipment an RRC message including an EDT information element of an anchor carrier PRACH resource selection probability list (i.e., the nprach-ProbabilityAnchorList-EDT information element) or an RRC message including an information element of an anchor carrier PRACH resource selection probability list (i.e., the nprach-ProbabilityAnchorList information element) and a coefficient (i.e., a coeff information element or a coeff list information element).

In step S202, a random access preamble for indicating EDT transmitted from the user equipment is received.

Specific embodiments involved in the present disclosure will be described in detail below. In addition, the embodiments in the present disclosure are illustrative descriptions for easy understanding of the present disclosure, and are not intended to limit the present disclosure.

### Embodiment 1:

A PRACH resource determination method for a case in which PRACH resources corresponding to one coverage enhancement level include PRACH resources on a plurality of carriers is provided in this embodiment. This embodiment is executed by a UE, and is specifically executed by a MAC layer or an RRC layer of the UE.

When a random access procedure for EDT is triggered, and a plurality of carriers provide PRACH resources for the same coverage enhancement level, if a MAC layer is configured with EDT and intends to use the EDT, then the UE uses the following selection probability to randomly select a PRACH resource on a carrier:

A selection probability of an anchor carrier PRACH resource is nprach-ProbabilityAnchorEDT. The nprach-ProbabilityAnchorEDT is provided by a corresponding item in a nprach-ProbabilityAnchorList-EDT information element. The corresponding item is an item associated with the corresponding coverage enhancement level.

The selection probabilities of all non-anchor carrier PRACH resources are equal, and the probability of selecting a PRACH resource on a non-anchor carrier is (1 - nprach-ProbabilityAnchorEDT) / (the number of non-anchor PRACH resources), where the number of non-anchor carrier PRACH resources is the number of non-anchor carrier PRACH resources configured for EDT. Specifically, the number of non-anchor carrier PRACH resources configured with conventional non-EDT is not included.

The nprach-ProbabilityAnchorList-EDT information element includes an nprach-ProbabilityAnchorEDT information element list, which is used for configuring a selection probability of each PRACH resource on the anchor carrier for EDT, and each item in the list corresponds to one coverage enhancement level. The number of items in the list and the order of each entry are the same as those in nprach-ParameterList-EDT in a system information block type 2. The nprach-ProbabilityAnchorEDT information element is used for configuring a selection probability of the anchor carrier PRACH resource for EDT. Optionally, if the information element does not exist, then it is considered that the selection probability of the anchor carrier PRACH resource is 1, which is equivalent to that the nprach-ProbabilityAnchorEDT value is 1.

This embodiment also includes that the UE or the RRC layer of the UE receives an RRC message transmitted from the base station and including the nprach-ProbabilityAnchorList-EDT information element. Preferably, the RRC message is a system information block 2.

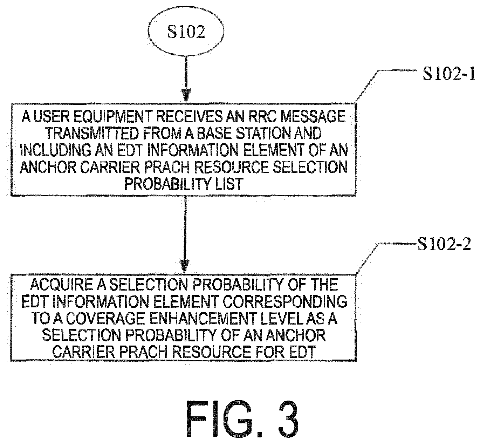

FIG. 3 illustrates a flowchart of a method for determining a selection probability of an anchor carrier PRACH resource for EDT according to an embodiment of the present disclosure, which corresponds to step S102 in FIG. 1.

In step S102-1, the user equipment receives an RRC message transmitted from a base station and including an EDT information element of an anchor carrier PRACH resource selection probability list (i.e., the nprach-ProbabilityAnchorList-EDT information element).

In step S102-2, the selection probability corresponding to the coverage enhancement level in the EDT information element is acquired as the selection probability of the anchor carrier PRACH resource for EDT.

With the method described in this embodiment, the UE can select, with a correct probability, the anchor carrier or the non-anchor carrier configured with the PRACH resource for EDT, thereby avoiding signaling overhead and delay caused by falling back of the UE to a conventional non-EDT operation due to selection of a carrier not configured with the PRACH resource for EDT.

### Embodiment 2:

Another PRACH resource determination method for a case in which PRACH resources corresponding to one coverage enhancement level include PRACH resources on a plurality of carriers is provided in this embodiment. This embodiment is executed by a UE, and is specifically executed by a MAC layer or an RRC layer of the UE. This embodiment is similar to Embodiment 1, and the difference is that a selection probability of an anchor carrier PRACH resource for EDT (i.e., nprach-ProbabilityAnchorEDT) is not acquired directly, but is acquired based on nprach-ProbabilityAnchor via a scaling factor or coefficient.

When a random access procedure for EDT is triggered, and a plurality of carriers provide PRACH resources for the same coverage enhancement level, if a MAC layer is configured with EDT and intends to use the EDT, then the UE uses the following selection probability to randomly select a PRACH resource on a carrier:

A selection probability of an anchor carrier PRACH resource is (coeff × nprach-ProbabilityAnchor). nprach-ProbabilityAnchor is provided by a corresponding item in an nprach-ProbabilityAnchorList information element. The corresponding item is an item associated with the corresponding coverage enhancement level.

The selection probabilities of all non-anchor carrier PRACH resources are equal. The probability of selecting a PRACH resource on a non-anchor carrier is (1 - (coeff × nprach-ProbabilityAnchor)) / (the number of non-anchor PRACH resources), where the number of non-anchor carrier PRACH resources is the number of non-anchor carrier PRACH resources configured for EDT. Specifically, the number of non-anchor carrier PRACH resources configured with conventional non-EDT is not included.

The coeff information element is used for configuring an anchor carrier PRACH resource selection probability coefficient. Preferably, the configuration includes a coeff information element list for configuring a selection probability coefficient of each PRACH resource on the anchor carrier for EDT, and each item in the list corresponds to one coverage enhancement level. The number of items in the list and the order of each entry are the same as those in nprach-ParameterList-EDT in a system information block type 2. Alternatively, the configuration includes only one coeff information element, which is applicable to each PRACH resource on the anchor carrier for EDT and, specifically, applicable to PRACH resources corresponding to all coverage enhancement levels. Optionally, a value range of the coeff information element is a fraction or decimal between 0 and 1, such as 1/2 and 0.25.

This embodiment also includes that the UE or the RRC layer of the UE receives an RRC message transmitted from the base station and including the coeff information element or the coeff list information element. Preferably, the RRC message is a system information block 2.

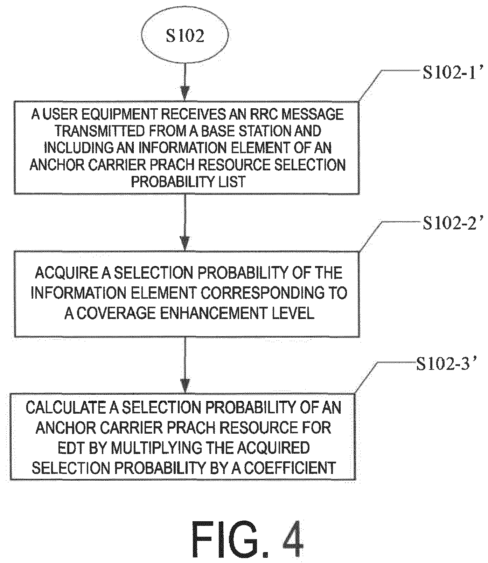

FIG. 4 illustrates a flowchart of another example of a method for determining a selection probability of an anchor carrier PRACH resource for EDT according to an embodiment of the present disclosure. The method corresponds to step S102 in FIG. 1.

In step S102-1', the user equipment receives an RRC message transmitted from a base station and including an information element of an anchor carrier PRACH resource selection probability list (i.e., the nprach-ProbabilityAnchorList information element).

In step S102-2', the selection probability corresponding to the coverage enhancement level in the information element is acquired.

In step S102-3', the selection probability of an anchor carrier PRACH resource for EDT is calculated by multiplying the acquired selection probability by a coefficient. The coefficient is acquired based on the coverage enhancement level from the coefficient list (i.e., the coeff information element list) included in the RRC message, or is a fixed value ranging from 0 to 1 (i.e., the coeff information element).

With the method described in this embodiment, the UE can select, with a correct probability, the anchor carrier or the non-anchor carrier configured with the PRACH resource for EDT, thereby avoiding signaling overhead and delay caused by falling back of the UE to a conventional non-EDT operation due to selection of a carrier not configured with the PRACH resource for EDT.

### Embodiment 3:

A PRACH resource determination method for a case in which PRACH resources corresponding to one coverage enhancement level include PRACH resources on a plurality of carriers is provided in this embodiment. This embodiment is executed by a UE, and is specifically executed by a MAC layer of the UE.

When a random access procedure for EDT is triggered, and a plurality of carriers provide PRACH resources for the same coverage enhancement level, if a MAC layer is configured with EDT and intends to use the EDT, then the UE uses the following selection probability to randomly select a PRACH resource on a carrier:

If the anchor carrier is configured with a PRACH resource for EDT for the coverage enhancement level, then the selection probability of the anchor carrier PRACH resource is nprach-ProbabilityAnchor. nprach-ProbabilityAnchor is provided by a corresponding item in a nprach-ProbabilityAnchorList. The corresponding item is an item associated with the corresponding coverage enhancement level. If the anchor carrier is not configured with the PRACH resource for the EDT for the coverage enhancement level, then the UE considers that the nprach-ProbabilityAnchor value of the corresponding item in the nprach-ProbabilityAnchorList is 0, specifically, the UE considers the selection probability of the anchor carrier as 0.

The selection probabilities of all non-anchor carrier PRACH resources are equal. The probability of selecting a PRACH resource on a non-anchor carrier is (1 - nprach-Probability Anchor) / (the number of non-anchor PRACH resources), where the number of non-anchor carrier PRACH resources is the number of non-anchor carrier PRACH resources configured for EDT, Specifically, the number of non-anchor carrier PRACH resources configured with conventional non-EDT is not included.

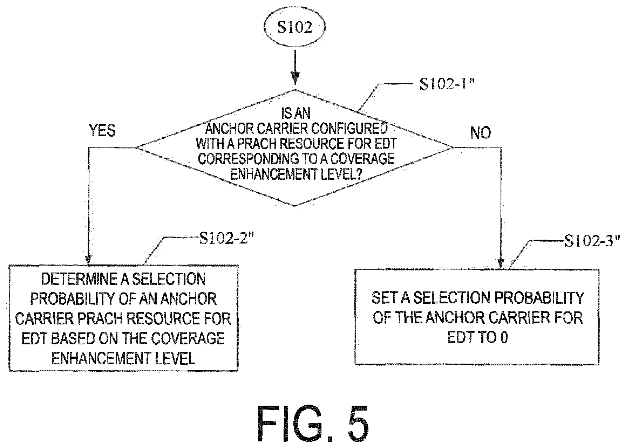

FIG. 5 illustrates a flowchart of still another example of a method for determining a selection probability of an anchor carrier PRACH resource for EDT according to an embodiment of the present disclosure. The method corresponds to step S102 in FIG. 1.

In step S102-1", it is determined whether an anchor carrier is configured with a PRACH resource for EDT corresponding to the coverage enhancement level.

If it is determined as "Yes" in step S102-1", then the process proceeds to step S102-2". In step S102-2", the selection probability of an anchor carrier PRACH resource for EDT is determined based on the coverage enhancement level.

If it is determined as "No" in step S102-1", then the process proceeds to step S102-3", In step S102-3", the selection probability of the anchor carrier for EDT is set to 0.

With the method described in this embodiment, the UE can select, with a correct probability, the anchor carrier or the non-anchor carrier configured with the PRACH resource for EDT, thereby avoiding signaling overhead and delay caused by falling back of the UE to a conventional non-EDT operation due to selection of a carrier not configured with the PRACH resource for EDT.

### Embodiment 4:

A PRACH resource determination method for a case in which a PRACH resource for EDT and a PRACH resource for conventional non-EDT overlap in a time domain or a frequency domain is provided in this embodiment. This embodiment is executed by a UE or a MAC layer of the UE.

If the MAC layer is configured with EDT, when a random access resource for transmitting a random access preamble, such as an available subframe including a PRACH or an available PRACH subcarrier, is selected in a random access procedure for EDT, if the subframe including a PRACH for EDT conflicts with a subframe including a PRACH for conventional non-EDT, then the UE considers the subframe as an unavailable PRACH subframe. Specifically, the UE does not select this subframe to transmit the random access preamble. If the PRACH subcarrier for EDT conflicts with a PRACH subcarrier for conventional non-EDT, the UE considers the PRACH subcarrier as an unavailable PRACH subcarrier. Specifically, the UE does not select the PRACH subcarrier to transmit the random access preamble.

In the time domain, another manner of describing the method is: when a next available subframe including a PRACH is determined, if the UE is an NB-IoT UE, and the MAC layer is configured with EDT (or the random access procedure is used for EDT), then the available subframe including a PRACH is allowed by the limitation of the subframe occupied by the PRACH resource for conventional non-EDT. Specifically, the subframe occupied by the PRACH resource for conventional non-EDT is excluded. The subframe occupied by the PRACH resource for conventional non-EDT refers to a subframe occupied by a PRACH resource configured by the NPRACH-ParametersList information element.

In the frequency domain, another manner of describing the method is: when a next available PRACH subcarrier is determined, if the UE is an NB-IoT UE, and the MAC layer is configured with EDT (or the random access procedure is used for EDT), then the available PRACH subcarrier is allowed by the limitation of the PRACH subcarrier occupied by the PRACH resource for conventional non-EDT. Specifically, the PRACH subcarrier occupied by the PRACH resource for conventional non-EDT is excluded (or avoided or ignored). The PRACH subcarrier occupied by the conventional non-EDT PRACH resource refers to the PRACH subcarrier occupied by the PRACH resource configured by the NPRACH-ParametersList information element.

Preferably, the subframes or PRACH subcarriers occupied by the conventional non-EDT PRACH resources refer to the subframes or PRACH subcarriers occupied by the PRACH resources corresponding to all coverage enhancement levels of the conventional non-EDT. Specifically, the subframes or PRACH subcarriers occupied by PRACH resources configured in all the NPRACH-Parameters items in the NPRACH-ParametersList information element. Alternatively, the subframes or PRACH subcarriers occupied by conventional non-EDT PRACH resources refer to subframes or PRACH subcarriers occupied by conventional non-EDT PRACH resources corresponding to the current coverage enhancement level of the UE, specifically, the subframes or PRACH subcarriers occupied by the PRACH resources configured in the NPRACH-Parameters item corresponding to the current coverage enhancement level of the UE in the NPRACH-ParametersList information element.

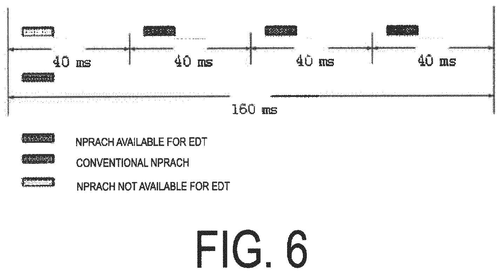

FIG. 6 illustrates a diagram showing an example of a period of a PRACH resource for EDT and a PRACH resource for conventional non-EDT in a time domain according to an embodiment of the present disclosure. As illustrated in FIG. 6, a PRACH resource for EDT has a period of 40 milliseconds in the time domain, and a PRACH resource for conventional non-EDT has a period of 160 milliseconds in the time domain. The subframes of the two PRACH resources in the time domain overlap with each other (i.e., conflict with each other). The UE considers that the conflicting subframe is unavailable, specifically, that the available subframes including a PRACH are subframes other than the conflicting subframe.

According to the method illustrated in FIG. 6, when a UE that supports EDT transmits a random access preamble for indicating EDT, subframes or PRACH subcarriers occupied by conventional non-EDT PRACH resources can be excluded such that conventional non-EDT users or conventional non-EDT random access procedures are not affected. As a result, after receiving the random access preamble, the base station can determine whether the UE that transmitted the random access preamble performs according to EDT or according to conventional non-EDT.

### Embodiment 5:

A PRACH resource determination method for a case in which PRACH resources corresponding to one coverage enhancement level include PRACH resources on a plurality of carriers is provided in this embodiment. This embodiment is executed by a base station and corresponds to the method executed by the UE in Embodiment 1.

The method includes that the base station transmits to the UE an RRC message including a nprach-ProbabilityAnchorList-EDT information element. Preferably, the RRC message is a system information block 2. The nprach-ProbabilityAnchorList-EDT information element includes an nprach-ProbabilityAnchorEDT information element list, which is used for configuring a selection probability of each PRACH resource on the anchor carrier for EDT, and each item in the list corresponds to one coverage enhancement level. The number of items in the list and the order of each entry are the same as those in nprach-ParameterList-EDT in a system information block type 2. The nprach-ProbabilityAnchorEDT information element is used for configuring a selection probability of the anchor carrier PRACH resource for EDT. Optionally, if the information element does not exist, then it is considered that the selection probability of the anchor carrier PRACH resource is 1, which is equivalent to that the nprach-ProbabilityAnchorEDT value is 1.

Optionally, the method also includes that the base station receives a random access preamble on the corresponding PRACH resource.

### Embodiment 6:

Another PRACH resource determination method for a case in which PRACH resources corresponding to one coverage enhancement level include PRACH resources on a plurality of carriers is provided in this embodiment. This embodiment is executed by a base station and corresponds to the method executed by the UE in Embodiment 2.

This embodiment is similar to Embodiment 5, and the difference is that the selection probability of the anchor carrier PRACH resource for EDT (i.e., nprach-ProbabilityAnchorEDT) is not acquired directly, but is acquired based on nprach-ProbabilityAnchor via a scaling factor or coefficient.

The method includes that the base station transmits to the UE an RRC message including a coeff information element or a coeff list information element. Preferably, the RRC message is a system information block 2. The coeff information element is used for configuring an anchor carrier PRACH resource selection probability coefficient. Preferably, the configuration includes a coeff information element list for configuring a selection probability coefficient of each PRACH resource on the anchor carrier for EDT, and each item in the list corresponds to one coverage enhancement level. The number of items in the list and the order of each entry are the same as those in nprach-ParameterList-EDT in a system information block type 2. Alternatively, the configuration includes only one coeff information element, which is applicable to each PRACH resource on the anchor carrier for EDT, specifically, applicable to PRACH resources corresponding to all coverage enhancement levels. The value range thereof is 0 to 1.

The coeff is applied as follows:
A selection probability of an anchor carrier PRACH resource is (coeff × nprach-ProbabilityAnchor). nprach-ProbabilityAnchor is provided by a corresponding item in an nprach-ProbabilityAnchorList information element. The corresponding item is an item associated with the corresponding coverage enhancement level.

The selection probabilities of all non-anchor carrier PRACH resources are equal. The probability of selecting a PRACH resource on a non-anchor carrier is (1 - (coeff × nprach-ProbabilityAnchor)) / (the number of non-anchor PRACH resources), where the number of non-anchor carrier PRACH resources is the number of non-anchor carrier PRACH resources configured for EDT. Specifically, the number of non-anchor carrier PRACH resources configured with conventional non-EDT is not included.

Optionally, the method further includes that the base station receives, on the configured PRACH resource, a random access preamble transmitted by the UE.

### Embodiment 7:

A PRACH resource determination method for a case in which PRACH resources corresponding to one coverage enhancement level include PRACH resources on a plurality of carriers is provided in this embodiment. This embodiment is executed by a UE or a MAC layer of the UE.

When a random access procedure for EDT is triggered, and a plurality of carriers provide PRACH resources for the same coverage enhancement level, if the MAC layer is configured with EDT and intends to use EDT, then the UE randomly selects, with an equal probability, a PRACH resource from a set of PRACH resources for EDT provided by the plurality of carriers. The carriers include anchor carriers and non-anchor carriers. Specifically, the UE ignores (does not apply) the anchor carrier selection probability instructed by the nprach-ProbabilityAnchor information element received in the RRC message.

### Embodiment 8:

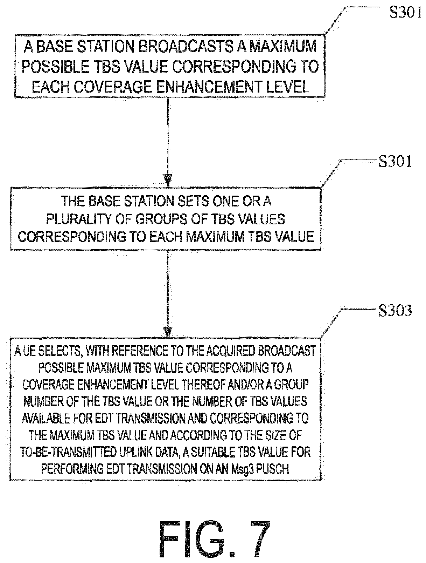

FIG. 7 illustrates a flowchart of a method for determining a TBS value in a random access response (RAR) in a random access procedure for EDT according to an embodiment of the present disclosure. The method 700 is implemented on a base station and a UE.

In step S301, the base station broadcasts the maximum possible TBS value corresponding to each coverage enhancement level.

The maximum transmission block size broadcast via system information may be selected from a plurality of TBS values. For example, 8 broadcast possible maximum TBS values may be defined. The 8 TBS values should be taken from a transmission block size table of a Rel-13 Physical Uplink Shared Channel (PUSCH). Three bits of information are used in the system information to configure a maximum TBS value for each coverage enhancement level.

In step S302, the base station sets one or a plurality of groups of TBS values corresponding to each maximum TBS value. Optionally, Step S302 may include informing the UE of one or a plurality of groups of TBS values corresponding to each maximum TBS value and, alternatively, may also include a group number of the TBS value or the number of TBS values available for EDT transmission and corresponding to each broadcast possible maximum TBS value.

In step S303, a UE selects, with reference to the acquired broadcast possible maximum TBS value corresponding to a coverage enhancement level thereof and/or the group number of the TBS value or the number of TBS values available for EDT transmission and corresponding to the maximum TBS value and according to the size of to-be-transmitted uplink data, a suitable TBS value for performing EDT transmission on an Msg3 PUSCH.

The following embodiments 9 to 11 respectively describe the above steps in Embodiment 8 in detail.

### Embodiment 9:

A method for determining a maximum possible TBS value for EDT is provided in this embodiment, and is implemented on a base station side. The method corresponds to step S301 in Embodiment 8.

In the existing 3GPP standards and specifications related to MTC, the minimum resource allocation unit of a PUSCH is a physical resource block (PRB), which supports two coverage enhancement modes: a coverage enhancement mode A (CE mode A) and a coverage enhancement mode B (CE mode B). For CE mode A, the maximum transmission block size for early data transmission in Msg3 is 1000 bits; for CE mode B, the maximum transmission block size for early data transmission in Msg3 is 936 bits. For NB-IoT, the maximum transmission block size for early data transmission in Msg3 should be 1000 bits. Considering that the protocol overhead of the EDT itself requires 25 bytes, the minimum TBS value for EDT transmission in Msg3 should be at least greater than 200 bits. For example, the minimum TBS value for a case in which EDT transmission is performed in Msg3 may be 256 bits (or 280 or 296 or 328 bits). Then, the 8 possible maximum TBS values for broadcasting should be selected between the maximum TBS value and the minimum TBS value for EDT transmission. The 8 values may be evenly distributed between the maximum TBS value and the minimum TBS value available for EDT transmission. For example, the maximum TBS for EDT transmission is 936 bits, and the minimum TBS is 256 bits. According to the principle of uniform distribution, the 8 possible TBS values should be 256, 256+floor((936-256) / 7), 256+2 ^{∗}floor((936-256) / 7), 256+3^{∗}floor((936-256) / 7), 256+4^{∗}floor((936-256) / 7), 256+5^{∗}floor((936 -256) / 7), 256+6^{∗}floor ((936-256) / 7), and 936 bits, specifically, 256, 353, 450, 547, 644, 741, 838, and 936. The 8 possible maximum TBS values of the broadcast must be taken from a transmission block size table of the Rel-13 PUSCH (see the Non-Patent Document 1: 3GPP TS 36.213 V13.7.0 (2017-09), Table 7.1.7.2.1-1 in the physical layer step). Therefore, the TBS value closest to the above 8 values may be found in the transmission block size table of the Rel-13 PUSCH to serve as the possible maximum TBS value of the broadcast. Therefore, the following 8 values can be acquired: 256, 336, 456, 552, 632, 744, 840, and 936. 8 possible maximum TBS values for broadcasting may also be acquired in the same manner for the maximum TBS value of 1000 bits and the minimum TBS value of 280 (or 296 or 328, etc.) for EDT transmission.

Alternatively, the 8 possible maximum TBS values for broadcasting are determined in other ways. For example, the minimum TBS value among the 8 maximum TBS values for broadcasting may be determined according to the minimum TBS value available for EDT transmission. The principle of determination may be as follows: if the minimum TBS value available for EDT transmission is 256 bits, then for each maximum TBS value of the broadcast, up to 4 TBS values are available for a user equipment (UE) to select when transmitting EDT in Msg3. Then, the minimum TBS value among the 8 possible maximum TBS values of the broadcast may be 440. Then the other 6 TBS values among the 8 possible maximum TBS values available for broadcasting may be selected according to the above principle of uniform distribution. Therefore, the 8 maximum TBS values available for broadcasting are obtained.

For the MTC, the 8 possible maximum TBS values for broadcasting should be defined or set based on the CE mode A and the CE mode B respectively.

### Embodiment 10:

Based on Embodiment 8, a method for setting possible TBS values in an RAR used in a random access procedure for EDT is provided in this embodiment, and is implemented on a base station side. The method corresponds to step S302 in Embodiment 8.

The base station separately sets one group or/and a plurality of groups of TBS values available for EDT transmission for each possible maximum TBS value of the broadcast. The number of TBS values in each group is different. For example, for each possible maximum TBS value of the broadcast, up to 4 TBS values are available for the UE to select when transmitting EDT in Msg3, and therefore, at most 4 groups of TBS values may be defined for each possible maximum TBS value of the broadcast. The numbers of TBS values in these four groups of TBS values are 1, 2, 3, and 4, respectively. Only 1 TBS value exists in group 1; 2 TBS values exist in group 2; 3 TBS values exist in group 3; 4 TBS values exist in group 4. The maximum TBS value in each group may or must be the maximum TBS value of the broadcast. The manner of determining the TBS value in each group is as follows: For group 1, only one TBS value exists, and the TBS value is taken as the maximum TBS value of the broadcast. For group 2, 2 TBS values exist; the maximum TBS value of the broadcast may be taken; an average value between the maximum TBS value of the broadcast and the minimum TBS value available for EDT transmission is calculated; according to the calculated average value, a TBS value closest to the average value is found in the Rel-13 PUSCH transmission block size table as the other TBS value of the group of TBS values. For group 3, 3 TBS values exist; the maximum TBS value of the broadcast and the minimum TBS value available for EDT transmission may be taken; an average value between the maximum TBS value of the broadcast and the minimum TBS value available for EDT transmission is calculated; according to the calculated average value, a TBS value closest to the average value is found in the Rel-13 PUSCH transmission block size table as another TBS value of the group of TBS values, thereby obtaining the 3 TBS values in group 3. For group 4, 4 TBS values exist; the maximum TBS value of the broadcast and the minimum TBS value available for EDT transmission may be taken; the other 2 TBS value should be evenly distributed between the maximum TBS value of the broadcast and the minimum TBS value available for EDT transmission. The other 2 TBS values in group 4 may be acquired by using the above principle of uniform distribution. Therefore, the 4 TBS values in group 4 are acquired.

The number of groups of TBS values available for EDT transmission or/and the TBS values in each group are separately set based on each possible maximum TBS value of the broadcast. The setting manner may be one of or a combination of a plurality of ways of predefining or broadcasting information, Radio Resource Control (RRC) signaling, Media Access Control (MAC) signaling, or physical layer signaling. Each TBS value in the one or/and a plurality of groups of TBS values available for EDT transmission should be less than or equal to the maximum TBS value of the broadcast. If only one TBS value for EDT transmission is set for a certain maximum TBS value of the broadcast or only one TBS value exists in the group, then the TBS may or must be the maximum TBS value of the broadcast.

Alternatively, the base station separately sets one or/or a plurality of groups of TBS values available for EDT transmission for each possible maximum TBS value of the broadcast. Then the base station configures for the UE the group number of the TBS value or the number of TBS values available for EDT transmission and corresponding to each possible maximum TBS value of the broadcast. The group number of the TBS value or the number of TBS values available for EDT transmission is separately configured based on each maximum possible TBS value of the broadcast. Alternately, the group number of the TBS value or the number of TBS values available for EDT transmission is uniformly configured based on all maximum possible TBS values of the broadcast.

The above setting or configuration may be one of or a combination of a plurality of ways of predefining or broadcasting information, Radio Resource Control (RRC) signaling, Media Access Control (MAC) signaling, or physical layer signaling.

### Embodiment 11:

Based on Embodiments 8 and 9, a method for determining a TBS value in an RAR used in a random access procedure for EDT is provided in this embodiment, and is implemented by a UE side. The method corresponds to step S303 in Embodiment 8.

According to the coverage enhancement level, the UE may know, from system broadcast information, the maximum TBS value broadcast by the base station for the coverage enhancement level. According to the group number of the TBS or the number of TBSs available for EDT transmission configured based on the maximum TBS value of the broadcast, a group of TBS values that can be selected by the UE when performing EDT transmission and correspond to the maximum TBS value of the broadcast may be known. The UE selects an appropriate TBS value according to the size of to-be-transmitted uplink data to perform EDT transmission on the Msg3 PUSCH. Specifically, the UE can acquire one or a plurality of TBS values available for EDT transmission via the maximum TBS value of the broadcast.

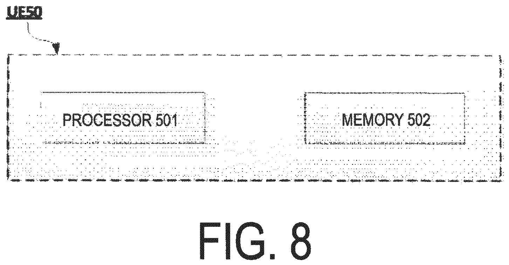

FIG. 8 illustrates a block diagram of a UE 50 according to an embodiment of the present disclosure. As illustrated in FIG. 8, the UE 50 includes a processor 501 and a memory 502. The processor 501 may include, for example, a microprocessor, a microcontroller, an embedded processor, and the like. The memory 502 may include, for example, a volatile memory (such as random access memory (RAM)), a hard disk drive (HDD), a non-volatile memory (such as a flash memory), or another memory system. The memory 502 stores program instructions. When run by the processor 501, the instructions can execute the above method executed by the user equipment described in detail in the present disclosure.

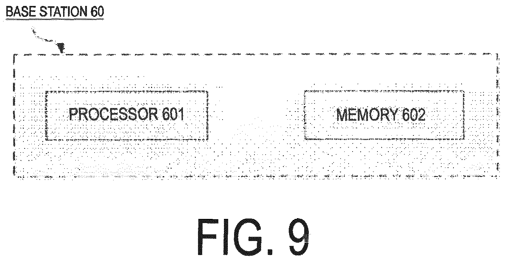

FIG. 9 is a block diagram of a base station 60 according to an embodiment of the present disclosure. As shown in FIG. 9, the base station 60 includes a processor 601 and a memory 602. As mentioned above, the base station 60 in the present disclosure may be any type of base station, including but not limited to: a Node B, an enhanced base station eNB, a 5G communication system base station gNB, or a micro base station, a pico base station, a macro base station, a home base station, or the like. The processor 601 may include, for example, a microprocessor, a microcontroller, an embedded processor, and the like. The memory 602 may include, for example, a volatile memory (such as a random access memory (RAM)), a hard disk drive (HDD), a non-volatile memory (such as a flash memory), or another memory system. The memory 602 stores program instructions. When run by the processor 601, the instructions can execute the above method executed by the base station described in detail in the present disclosure.

The program running on the device according to the present disclosure may be a program that enables a computer to implement the functions of the embodiments of the present disclosure via a central processing unit (CPU). The program or information processed by the program may be temporarily stored in a volatile memory (such as a random access memory (RAM)), a hard disk drive (HDD), a non-volatile memory (such as a flash memory), or another memory system.

Programs for fulfilling the functions of the various embodiments of the present disclosure may be recorded in a computer-readable recording medium. Corresponding functions may be fulfilled by causing a computer system to read the programs recorded in the recording medium and execute these programs. The so-called "computer system" here may be a computer system embedded in the device, and may include an operating system or hardware (such as peripheral devices). The "computer-readable recording medium" may be a semiconductor recording medium, an optical recording medium, a magnetic recording medium, a recording medium storing a program dynamically for a short time, or any other recording medium readable by a computer.

Various features or functional modules of the devices used in the disclosed embodiments may be implemented or executed by circuits (for example, single-chip or multichip integrated circuits). Circuits designed to execute the functions described in this specification may include a general-purpose processor, a digital signal processor (DSP), an application-specific integrated circuit (ASIC), a field programmable gate array (FPGA), or another programmable logic device, a discrete gate or transistor logic, a discrete hardware component, or any combination of the above devices. The general-purpose processor may be a microprocessor, or any existing processor, controller, microcontroller, or state machine. The above circuit may be a digital circuit or an analog circuit. In the case of new integrated circuit technologies that replace existing integrated circuits because of advancements in the semiconductor technologies, one or a plurality of embodiments of the present disclosure may also be implemented using these new integrated circuit technologies.

In addition, the present disclosure is not limited to the disclosed embodiments. Various examples of the embodiments have been disclosed; however, the present disclosure is not limited thereto. Fixed or non-mobile electronic devices mounted indoors or outdoors may be used as terminal devices or communication devices, such as AV devices, kitchen devices, cleaning devices, air conditioners, office devices, vending machines, and other household appliances.

The embodiments of the present disclosure have been described in detail with reference to the accompanying drawings. However, the specific structure is not limited to the disclosed embodiments, and the present disclosure may also include any design changes that do not deviate from the gist of the present disclosure. In addition, various modifications may be made to the present disclosure within the scope of the claims, and embodiments obtained by appropriately combining the technical means disclosed in different embodiments are also included in the technical scope of the present disclosure. In addition, the components having the same effects described in the above embodiments may be substituted for each other.

## Claims

1. A method executed by a user equipment, comprising:
acquiring a coverage enhancement level of the user equipment;
determining a selection probability of an anchor carrier physical random access channel (PRACH) resource for early data transmission (EDT) based on the coverage enhancement level;
determining a selection probability of a non-anchor carrier PRACH resource for EDT based on the selection probability of the anchor carrier PRACH resource for EDT and a number of non-anchor carrier PRACH resources for EDT;
randomly selecting a PRACH resource used for transmitting a random access preamble by using the determined selection probability of the anchor carrier PRACH resource for EDT and the determined selection probability of the non-anchor carrier PRACH resource for EDT; and
transmitting the random access preamble to a base station by using the selected PRACH resource.

2. The method according to claim 1, further comprising:
receiving a radio resource control (RRC) message from the base station, the RRC message including an EDT information element of an anchor carrier PRACH resource selection probability list; and
acquiring a selection probability corresponding to the coverage enhancement level in the EDT information element as the selection probability of the anchor carrier PRACH resource for EDT.

3. The method according to claim 1, further comprising:
receiving a radio resource control (RRC) message from the base station, the RRC message including an information element of an anchor carrier PRACH resource selection probability list; and
acquiring a selection probability corresponding to the coverage enhancement level in the information element; and
calculating the selection probability of the anchor carrier PRACH resource for EDT by multiplying the acquired selection probability by a coefficient, wherein
the coefficient is acquired based on the coverage enhancement level from a coefficient list included in the RRC message, or is a fixed value ranging from 0 to 1.

4. The method according to any of claims 1-3, wherein the selection probabilities of a number of non-anchor carrier PRACH resources for EDT are equal, and are calculated by the following formula:
(1 - the selection probability of the anchor carrier PRACH resource for EDT) / the number of the non-anchor carrier PRACH resources for EDT.

5. The method according to any of claims 1-3, wherein the selection probability of the anchor carrier PRACH resource for EDT is 0 if the anchor carrier is not configured with a PRACH resource for EDT corresponding to the coverage enhancement level.

6. The method according to any of claims 1-3, further comprising selecting the PRACH resource by excluding a PRACH resource occupied by a PRACH resource for conventional non-EDT.

7. A user equipment, comprising:
a processor; and
a memory storing instructions, wherein
the processor is configured to execute the instructions to perform the method of any of claims 1 to 6.

8. A method executed by a base station, comprising:
transmitting to a user equipment an RRC message comprising an EDT information element of an anchor carrier PRACH resource selection probability list, or an RRC message comprising an information element of an anchor carrier PRACH resource selection probability list and a coefficient; and
receiving a random access preamble for indicating EDT transmitted from the user equipment.

9. The method according to claim 8, wherein the user equipment is the user equipment according to claim 7.

10. A base station, comprising:
a processor; and
a memory storing instructions, wherein
the processor is configured to execute the instructions to perform the method according to claim 8 or 9.
